**Europäisches Patentamt**

**European Patent Office**

**Office européen des brevets**

(19)

(11) Publication number: **0 188 088**
**A2**

(12) # EUROPEAN PATENT APPLICATION

(21) Application number: **85309003.3**

(22) Date of filing: **11.12.85**

(51) Int. Cl.⁴: **G 11 B 7/095**
**G 11 B 19/24**

(30) Priority: **11.12.84 JP 262491/84**

(43) Date of publication of application:
**23.07.86 Bulletin 86/30**

(84) Designated Contracting States:
**DE FR GB**

(71) Applicant: **Pioneer Electronic Corporation**
**4-1 Meguro 1-chome**
**Meguro-ku Tokyo 153(JP)**

(72) Inventor: **Yoshio, Junichi Pioneer Electronic Corporation**
**Tokorozawa Works No. 2610, Hanazono 4-chome**
**Tokorozawa-shi Saitama(JP)**

(74) Representative: **Brunner, Michael John et al,**
**GILL JENNINGS & EVERY 53-64 Chancery Lane**
**London WC2A 1HN(GB)**

(54) **Servo controlling circuit.**

(57) A servo controlling circuit for, e.g. an optical disk reader, has a simplified arrangement, whereby, in a signal generated when a pickup of, e.g. the optical reader, passes over an abnormal portion (b) of a recorded disk, a high-frequency component corresponding to noise is treated so as to have a higher level than a low-frequency component corresponding to disk eccentricity, the high-frequency component then being cut off, so that malfunctions such as track jumping are prevented by amplitude limiting the controlling signal.

*FIG. 2*

| TRACKING ERROR SIGNAL GENERATING CKT. | HIGH-FREQ. BAND PHASE COMPENSATION CKT. | LIMITER | LOW-FREQ. BAND GAIN COMPENSATION CKT. | ACTUATER |
|---|---|---|---|---|
| 11 | 12 | 13 | 14 | 15 |
| (A) | (B) | (C) | | |

Croydon Printing Company Ltd.

EP 0 188 088 A2

Pioneer Electronic Corporation.     Ref: 90/2563/02

## SERVO CONTROLLING CIRCUIT

The present invention generally relates to a servo controlling circuit, and particularly to a servo controlling circuit in an information reader for reading recorded information out of an information recording disk.

In an information reader, for example an optical information reader for optically reading out recorded information of an information recording disk (simply referred to as a "disk", hereinafter) operating under control of a spindle servo device, recorded information is read out by a pickup that moves along a radial direction of the disk, as the disk rotates. Further, there are provided a focus servo device which focuses an information detecting spotlight from the pickup on a recording surface of the disk, and a tracking servo device which causes the spotlight to track a recording track, for example, spirally formed on the recording surface of the disk.

In the information reader provided with these kinds of servo devices as described above, however, when there exists an abnormal portion such as a defect, a scar, or the like, on the recording surface of the disk to be reproduced, it is possible that an error signal of the servo system would be disturbed, thereby

-1-

0188088

causing a malfunction such as track jumping, or the like when the information reading spotlight from the pickup tracks the recording track at the abnormal portion.

Accordingly, in Japanese Patent Application No. 45972/1984, there has been proposed a tracking servo device in which a first tracking error signal is generated from an output signal of a pickup and a second tracking error signal is separately generated from the first tracking error signal by detecting an eccentric component of a disk at an information detecting point of the pickup independently of the output signal thereof. When the level of the first tracking error signal exceeds a predetermined value, it is judged that the rise in level is caused by a defect or the like, and a servo controlling operation is changed over to be performed on the basis of the second tracking error signal.

According to such a servo device as described above, sufficiently stable tracking control is performed even if there exists an abnormal portion on the recording surface of a disk, so that it is possible to improve the trackability (i.e., the capability of following a track) of an information detecting spotlight.

In the servo device, however, it is necessary to provide means for generating the second tracking error signal, means for determining whether the information detecting spotlight is positioned on the abnormal portion on the disk recording surface, and means for alternatively selecting the first or second

-2-

tracking error signal based on the determination. As a result, the circuit arrangement is complicated and the servo device is expensive.

An object of the present invention, therefore, is to provide a servo controlling circuit whereby a sufficiently stable servo operation may be performed with a simple arrangement and with a low cost.

According to the invention a servo controlling circuit in which driving control of an information recording disk or of a pickup for reading recorded information from the information recording disk is effected in accordance with a controlling signal derived from an output signal of the pickup is characterized by level correcting means for receiving the controlling signal and for raising the level of a high-frequency band component of the controlling signal above the level of a low-frequency band component of the controlling signal; and amplitude limiting means having a predetermined amplitude limiting level exceeding the maximum amplitude of the low-frequency band component, for limiting the amplitude of the output signal from the level correcting means, whereby the driving control of the pickup or disk is performed in accordance with an output signal of the amplitude limiting means.

The controlling signal may be a tracking error signal, a focus error signal or a disk rotational speed error signal.

In the drawings:-

Figure 1 shows a positional relationship among the three spotlights relative to the recording track and the circuit arrangement of the tracking error signal generating circuit;

Figure 2 is a block diagram showing one embodiment of the present invention;

Figure 3 is a circuit diagram showing the specific circuit arrangement of the high-frequency band phase compensating circuit in Figure 2;

Figure 4 shows a frequency characteristic of the circuit of Figure 3;

Figures 5A and 5B shows respective cross sections (A) and (B) of a defect and a scar on the disk recording surface, and

Figures 6A, 6B and 6C show respective waveforms (A) (B) and (C) of the parts of Figure 2.

Referring to the drawings, an embodiment according to the present invention now will be described in detail.

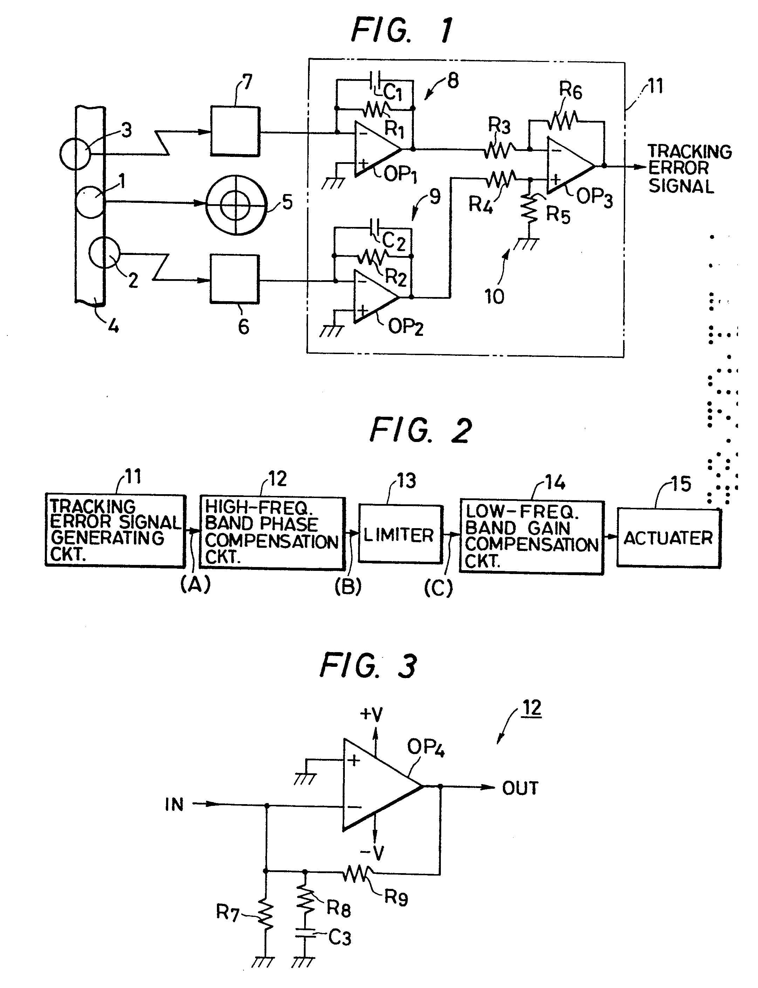

In Fig. 1, three spotlights which are obtained by converging respective laser beams, that is, a recorded-information detecting spotlight 1 and a pair of tracking information detecting spotlight 2 and 3 respectively preceding and succeeding the spotlight 1 when the spotlight 1 moves relative to a disk, are irradiated on a recording track 4 on the disk with the illustrated positional relationship. The pair of tracking information detecting spotlights 2 and 3 are positioned on respective side edges of the track 4 when the recorded information detecting spotlight 1 is positioned on a center line of the track 4. Therefore, when the recorded-information detecting spotlight 1 deviates from the center line of the track 4 in a direction perpendicular to the track 4 (in the radial direction of the disk), a difference in quantity of light between the reflected light beams of the pair of tracking information detecting spotlights 2 and 3 corresponds to the direction and quantity of the deviation of the spotlight 1. The respective reflected light beams of the spotlight 1, 2 and 3 are entered into photoelectric transducer elements 5, 6 and 7 which are contained in a pickup (not shown).

The respective reflected light beams of the tracking information detecting spotlights 2 and 3 entered into the photoelectric transducer elements 6 and 7 are respectively transduced by the transducer elements 6 and 7 into electric signals which are in turn supplied to a subtractor 10 through respective waveform shapers 8 and 9. The subtractor 10 comprises an operational amplifier $OP_3$ and resistors $R_3$ to $R_6$; the waveform shaper 8 comprises an operational amplifier $OP_1$, a capacitor $C_1$, and a resistor $R_1$; and the waveform shaper 9 comprises an operational amplifier $OP_2$, a capacitor $C_2$, and a resistor $R_2$. A tracking error signal generating circuit 11 for generating a tracking error signal, that is, a signal corresponding to a difference in level of an output between the photoelectric transducer elements 6 and 7, comprises these waveform shapers 8 and 9 and the subtractor 10. The tracking error signal is used as a controlling signal for the servo system.

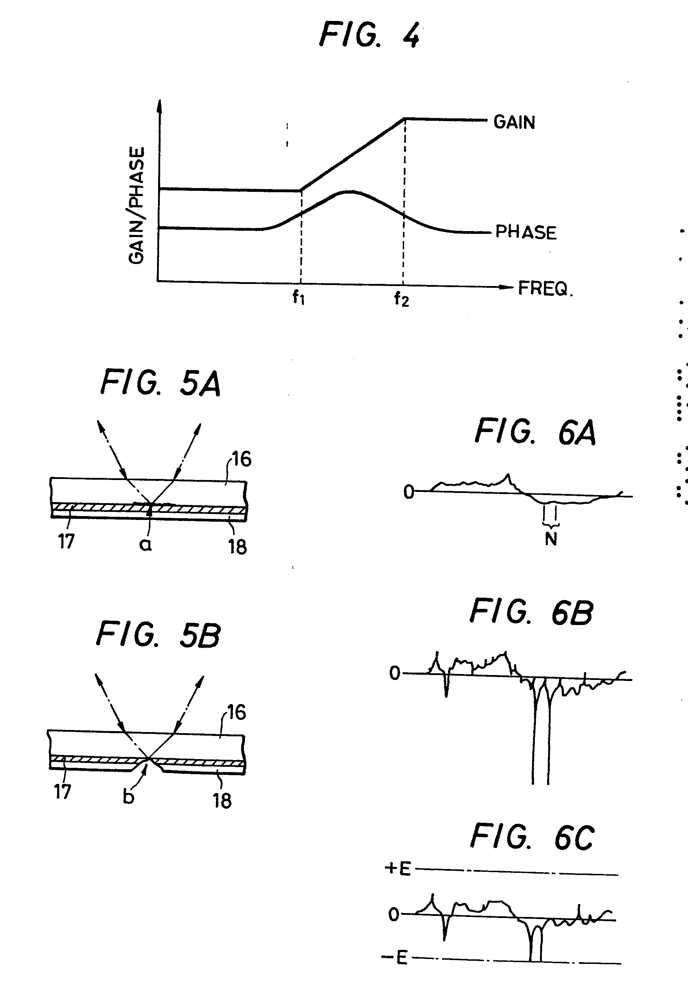

In Fig. 2, the tracking error signal produced from the tracking error signal generating circuit 11 is supplied to a high-frequency band phase compensating circuit 12 which functions as a level correcting means. In the high-frequency band phase compensating circuit 12, a signal level of a high-frequency band component of the tracking error signal is made higher than that of a low-frequency band component thereof. Such a high-frequency band phase compensating circuit 12 may comprise an operational amplifier $OP_4$, a capacitor $C_3$, and resistors $R_7$ to $R_9$ as shown in Fig. 3. The frequency characteristic of the circuit 12 is such that, as shown in Fig. 4, the gain is made high and the phase is advanced in the high-frequency band. Therefore, when the

-6-

tracking error signal is passed through the high-frequency phase compensating circuit 12, the high-frequency band component of the signal is emphasized to thereby perform phase advance compensation. As seen from Fig. 4, $f_1 = 1/2 R_8 C_3$; and $f_2 - 1/2 (R_7 + R_8)C_3$.

An output signal of the high-frequency band phase compensating circuit 12 is supplied to a limiter 13 which functions as an amplitude limiting means. This limiter 13 has a predetermined amplitude limiting level exceeding the maximum amplitude of a fluctuating component (the low-frequency band component of the tracking error signal) mainly caused by eccentricity of the disk, the above-mentioned maximum amplitude being an amplitude of the tracking error signal in the maximum eccentricity of the disk when the disk having the maximum permissible quantity of eccentricity is reproduced. The tracking error signal derived from the limiter 13 is supplied to an actuator 15 for driving the recorded information detecting spotlight 1 from the pickup to move in the radial direction of the disk relative to the recording track 4 after the gain of the low-frequency band component of the tracking error signal has been compensated in a low-frequency band gain compensating circuit 14.

Next, the operation of the above circuit arrangement will be described.

When a disk is reproduced, where there exists an abnormal portion such a s a defect a or a scar b, as shown in Figs. 5A and 5B, on the disk recording surface on which the recorded-information detecting spotlight 1 is irradiated, the abnormal portion is read with a high special frequency as it is, and therefore, the signal reading this abnormal portion is mixed into the tracking error signal as a high-frequency noise N extending to the high-frequency band as shown in Fig. 6A. If this noise N is supplied to the actuator 15 as is, the actuator 15 is kicked by this noise N, so that track jumping may result. In Figs. 5A and 5B, the reference numerals 16, 17, 18 designate a cover layer of polycarbonate, a plated surface, and a protecting plastic layer respectively.

According to the present invention, however, attention is focused on the fact that the unnecessary component due to an abnormal portion such as a certain kind of defect, a scar, or the like mainly falls in a high-frequency band component. It is an intent of the present invention to suppress the unnecessary component so as to prevent track jumping. That is, the tracking error signal as shown in Fig. 6A passed through the high-frequency band phase compensating circuit 12, thereby to raise the signal level of the high-frequency band component above that of the low-frequency band component as shown in Fig. 6B so as to make the eccentric component small relative to the noise component. Then, the tracking error signal having an amplitude level exceeding a predetermined amplitude limiting level by E is cut off in the succeeding stage limiter 13, whereby it becomes possible to restrict only the noise component without damaging any eccentric component concerning the tracking as shown in Fig. 6(C). Thereafter, sufficient gain compensation is performed for the low-frequency band component in the low-frequency band gain compensating circuit 14. As the result, the noise component can be suppressed so as to make it possible to prevent track jumping due to an abnormal portion on the disk recording surface.

Although the limiter 13 is used as the amplitude limiting means in the embodiment as described above, the output signal of the high-frequency band compensating circuit 12 is clipped with a predetermined level determined by a supply voltage + V so that a limiting function can be obtained when the high-frequency band phase compensating circuit 12 comprises an operational amplifier as shown in Fig. 3. Therefore, if the overall gain is suitably selected, the high-frequency band phase compensating circuit 12 may be used to function also as the amplitude limiting means, so that the circuit arrangements may be simplified further.

Further, although the low-frequency band gain compensating circuit 14 is provided at the succeeding stage of the limiter 13 in the embodiment as described above, it is possible alternatively to provide the circuit 14 at the preceding stage of the high-frequency band compensating circuit 12. However, since a dynamic range of the servo system is required, it is generally preferable to select the former arrangement in which the circuit 14 is provided at the succeeding stage of the limiter 13.

Furthermore, although the case has been described in which the servo controlling circuit according to the present invention is applied to the tracking servo system with particular advantage in the embodiment as described above, the present invention is not limited to this case but it is applicable to the servo controlling circuit in a focus servo system or a spindle servo system with the same effect. In this case, as a matter of course, a focus error signal or a disk rotational speed error signal is used as a controlling signal of the respective servo system.

As described above, according to the present invention, a noise component due to an abnormal portion such as a defect, a scar, or the like on the disk recording surface is suppressed. Consequently, it is possible to obtain a servo control circuit in which a sufficiently stable servo operation can be performed with a simple arrangement and a low cost.

## CLAIMS

1.   A servo controlling circuit in which driving control of an information recording disk or of a pickup for reading recorded information from the information recording disk is effected in accordance with a controlling signal derived from an output signal of the pickup, the circuit being characterized by level correcting means (12) for receiving the controlling signal and for raising the level of a high-frequency band component of the controlling signal above the level of a low-frequency band component of the controlling signal; and amplitude limiting means (13), having a predetermined amplitude limiting level exceeding the maximum amplitude of the low-frequency band component, for limiting the amplitude of the output signal from the level correcting means, whereby the driving control of the pickup or disk is performed in accordance with an output singal of the amplitude limiting means (13).

2.   A servo controlling circuit as claimed in claim 1, wherein the controlling signal is a tracking error signal.

3.   A servo controlling circuit as claimed in claim 1, wherein the controlling signal is a focus error signal.

4.   A servo controlling circuit as claimed in claim 1, wherein the controlling signal is a disk rotational speed error.

5.   A servo controlling circuit as claimed in claim 1, wherein the level correcting means comprises a high-frequency band phase compensating circuit (12).

6.    A servo controlling circuit as claimed  in  claim 1, further comprising gain-compensating means  (14) for  receiving  the  output  signal  of  the  amplitude limiting   means   and   adjusting   a   gain   of   the low-frequency component thereof.

## FIG. 1

## FIG. 2

## FIG. 3

## FIG. 4

## FIG. 5A

## FIG. 5B

## FIG. 6A

## FIG. 6B

## FIG. 6C